# EUROPEAN PATENT APPLICATION

(11) **EP 4 177 807 A1**
(43) Date of publication of application: **10.05.2023**
(21) Application number: 22204096.6
(22) Date of filing: 27.10.2022
(51) Int. Cl.: G06Q 10/087

(54) **CONTROLFLASH PLUS HARDWARE SERIALIZATION AND REGISTRATION**

(30) Priority: 08.11.2021 US 202163276755 P; 22.09.2022 US 202217934271
(71) Applicant: Rockwell Automation Technologies, Inc., Mayfield Heights, OH 44124-6188 (US)
(72) Inventor: Malaspina, Fabio, Mayfield Heights (US); Forguites, Jessica Ellen, Mayfield Heights (US); Stecklein, Mark, Mayfield Heights (US); Bliss, Ron E., Mayfield Heights (US)
(74) Representative: Grünecker Patent- und Rechtsanwälte PartG mbB

(57) **Abstract**

An industrial product inventory system generates a browsable inventory of a customer's industrial products based on product information retrieved from identity objects stored on the products. The system can also register this product information with a service provider that can provide product notifications and services based on analysis of the registered product information. These services can include verification of product authenticity, product or firmware upgrade notifications, security notifications, or other such services.

## Description

### CROSS-REFERENCE TO RELATED APPLICATIONS

This application claims priority to U.S. Provisional Patent Application Serial No. 63/276,755, filed on November 8, 2021, and entitled "CONTROLFLASH PLUS HARDWARE SERIALIZATION AND REGISTRATION," the entirety of which is incorporated herein by reference.

### TECHNICAL FIELD

The subject matter disclosed herein relates generally to industrial devices and products, and, more particularly, to industrial product inventory tracking.

### BACKGROUND ART

Given the large number of diverse industrial assets owned by a given industrial enterprise, maintaining an accurate inventory of an enterprise's industrial devices or equipment can be prohibitively challenging. Moreover, some types of industrial devices may be subject to recalls, software or firmware updates, security vulnerability notifications, or special offers from the vendors of those devices. Industrial asset owners may be unaware of these notifications and their applicability to assets within their inventory.

### BRIEF DESCRIPTION

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments, a system is provided, comprising a device discovery component configured to discover industrial products deployed at an industrial facility; an identity object retrieval component configured to retrieve information about the industrial products stored as identity objects on the industrial products; and a reporting component configured to render, on a client device, a browsable inventory of the industrial products based on the information about the industrial products.

Also, one or more embodiments provide a method, comprising discovering, by a system comprising a processor, industrial products deployed at an industrial facility; retrieving, by the system, identity objects from the industrial products, wherein the identity objects contain information about the industrial products; and rendering, by the system on a client device, an interface that displays a browsable inventory of the industrial products based on the information contained in the identity objects.

Also, according to one or more embodiments, a non-transitory computer-readable medium is provided having stored thereon instructions that, in response to execution, cause an edge device to perform operations, the operations comprising discovering industrial products operating at an industrial facility and having stored therein identity objects containing information about the industrial devices; retrieving identity objects from the industrial devices; and rendering, on a client device, an interface that displays a browsable inventory of the industrial devices based on the information contained in the identity objects

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a diagram of an example industrial control environment.
FIG. 2 is a block diagram of an example industrial product inventory system.
FIG. 3 is an example generalized architecture in which an industrial product inventory system can operate.
FIG. 4 is a diagram illustrating discovery and retrieval of identity objects from industrial products deployed within a plant environment, and registration of the identity objects by the industrial product inventory system.
FIG. 5 is a diagram illustrating delivery of product inventory reports and product notifications by the product inventory system.
FIG. 6 is an example inventory report that can be generated by a reporting component based on information contained in identity objects.
FIG. 7 is a flowchart of an example methodology for generating an inventory of an industrial asset owner's industrial products.
FIG. 8 is a flowchart of an example methodology for providing product-specific notifications to owners of industrial products.
FIG. 9 is a flowchart of an example methodology for proactively notifying industrial asset owners when firmware installed in their industrial products is out of date and updating the firmware on demand.
FIG. 10 is an example computing environment.
FIG. 11 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over stales, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

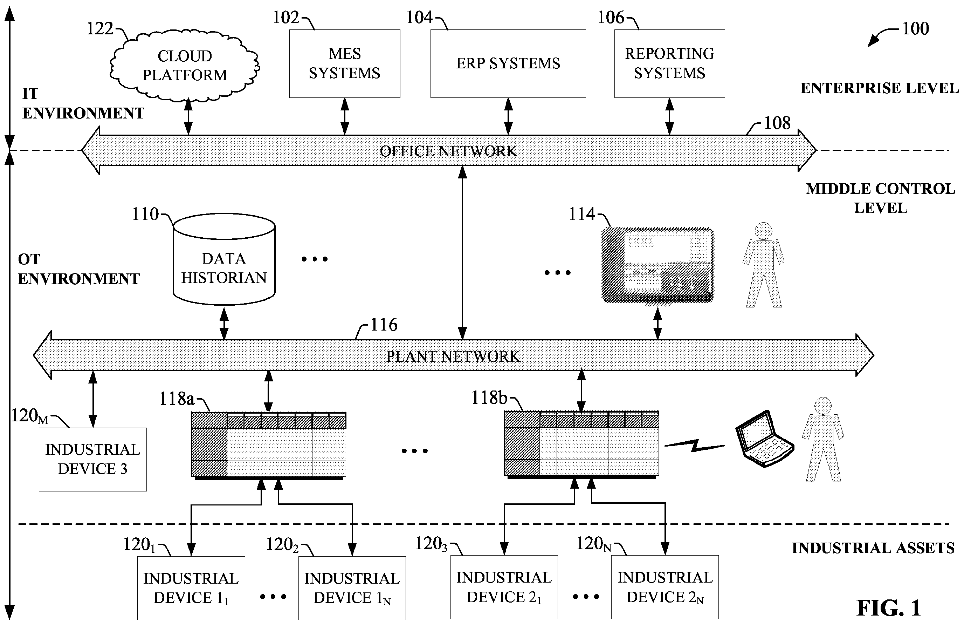

FIG. 1 is a diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). Some industrial controllers 118 may also comprise a soft controller executed on a personal computer or other hardware platform, or on a cloud platform. Some hybrid devices may also combine controller functionality with other functions (e.g.. visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like. Some industrial devices, such as industrial device 120M, may operate autonomously on the plant network 116 without being controlled by an industrial controller 118.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over the plant network 116 using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Industrial devices 120, industrial controllers 118, HMIs 114. associated controlled industrial assets, and other plant-floor systems such as data historians 110. vision systems, and other such systems operate on the operational technology (OT) level of the industrial environment. Higher level analytic and reporting systems may operate at the higher enterprise level of the industrial environment in the information technology (IT) domain; e.g., on a cloud platform 122 or on an office network 108 (which may be connected to the plant network 116 via a router 124 or other network infrastructure device). Such higher level systems can include, for example, enterprise resource planning (ERP) systems that integrate and collectively manage high-level business operations, such as finance, sales, order management, marketing, human resources, or other such business functions. Manufacturing Execution Systems (MES) 104 can monitor and manage control operations on the control level given higher-level business considerations.

In some architectures, selected sets of data generated by the industrial controllers 118 or their associated industrial devices 120 can be sent to remote applications or systems that execute on the cloud platform 112. Such cloud-based systems can include, for example, remote visualization systems, reporting systems MES systems, industrial internet-of-things (IIoT) systems, remote supervisory control systems, or other such cloud services. In such architectures, one or more edge devices 126 may reside on either the office network 108 or the plant network 116 and aggregate industrial data from these plant-floor devices for migration to these cloud-based systems or applications. In general, edge devices 126 act as gateways between data on the plant floor devices and the cloud-based systems that consume this data. The edge device 126 may also be used as a computing platform to host other applications that process data collected from the plant network before being passed on to the higher level cloud systems.

Given the large number of diverse industrial assets owned by a given industrial enterprise, maintaining an accurate inventory of an enterprise's industrial devices or equipment can be prohibitively challenging. Moreover, some types of industrial devices may be subject to recalls, software or firmware updates, security vulnerability notifications, or special offers from the vendors of those devices. Without a comprehensive knowledge of the industrial assets currently deployed and operating within their facilities, industrial asset owners may be unaware that these notifications or updates are available, or are applicable to assets within their inventory.

To address these and other issues, one or more embodiments described herein provide a system and architecture that allows industrial asset owners to easily create a browsable inventory of their industrial products - e.g., industrial controllers, motor drives, HMI terminals, I/O modules, networking devices, etc. - as well as to benefit from proactive notifications regarding their products. To this end, industrial devices or products can be provisioned with identity objects at the time of manufacture. The identity object for a given industrial product can contain information about the product, including but not limited to a model number, a serial number, a vendor identifier, the manufacturing date, a warranty number, a firmware revision, and other such information. Remote services that execute on a cloud platform or other public or private network can track the product inventory for multiple different customers by collecting and storing the information contained in these identity objects, and can leverage this product information to provide a range of information services to the customers, including but not limited to notifying customers of counterfeit products, providing end-of-life notifications, informing of newly discovered security vulnerabilities, offering product replacement recommendations, or other such information.

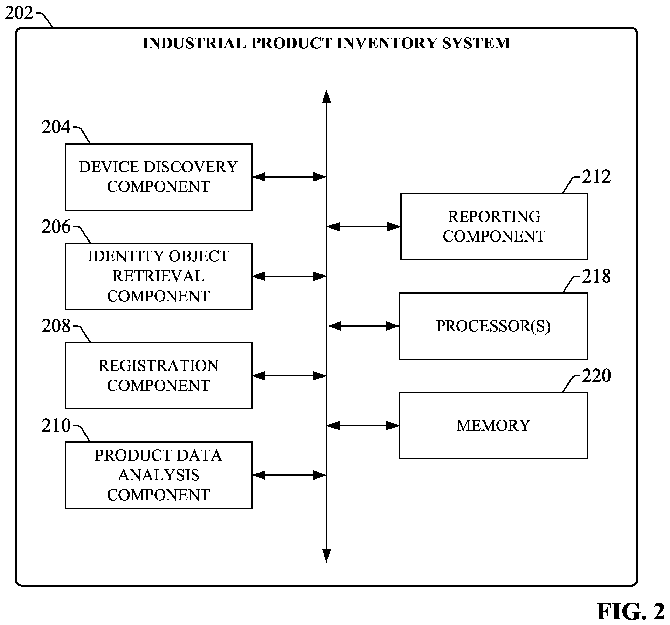

FIG. 2 is a block diagram of an example industrial product inventory system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Industrial product inventory system 202 can include a device discovery component 204, an identity object retrieval component 206. a registration component 208. a product data analysis component 210, a reporting component 212. one or more processors 218. and memory 220. In various embodiments, one or more of the device discovery component 204, identity object retrieval component 206, registration component 208, product data analysis component 210, reporting component 212, the one or more processors 218, and memory 220 can be electrically and/or communicatively coupled to one another to perform one or more of the functions of the industrial product inventory system 202. In some embodiments, components 204, 206, 208, 210, and 212 can comprise software instructions stored on memory 220 and executed by processor(s) 218. Industrial product inventory system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

Device discovery component 204 can be configured to communicatively interface with a plant network at a customer facility and to discover industrial products (e.g., industrial devices or assets such as industrial controllers, motor drives, variable frequency drives, HMI terminals, or other such devices) that are deployed on the plant network. Identity object retrieval component 206 can be configured to retrieve information about each discovered industrial product contained on respective identity objects stored on the products. Registration component 208 can be configured to register the retrieved product information in association with an identifier of the owner of the industrial products.

Product data analysis component 210 can be configured to perform a variety of analyses on the registered product information, including but not limited to verification that the products are not counterfeit devices, lifecycle analysis, security checks, determinations of whether upgraded versions of the products are available, or other such analyses. Reporting component 212 can be configured to render, on a client device, browsable product inventory information based on the registered product information, as well as notifications directed to the product owner based on results of the product data analysis.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

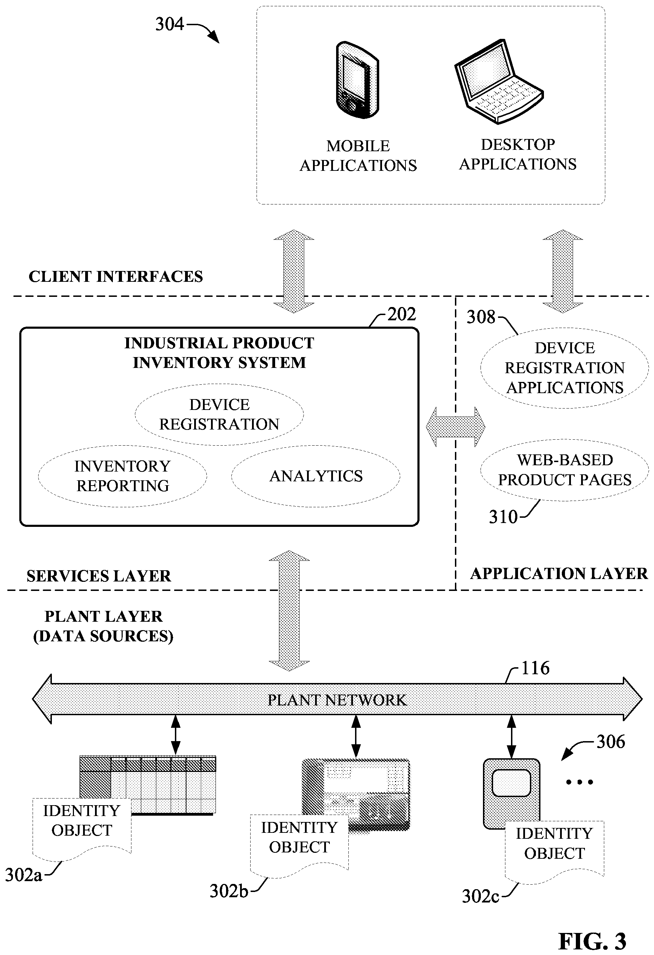

FIG. 3 is an example generalized architecture in which the industrial product inventory system can operate. In this example architecture, industrial product inventory system 202 executes on a services layer (e.g., on a cloud platform or on another public network such as the internet) and provides industrial product inventory and analysis services for multiple customers (that is, for multiple owners of industrial products 306). Industrial products 306 can comprise substantially any type of industrial device or asset, including but not limited to industrial controllers 118 and their associated local or remote I/O modules, motor drives such as variable frequency drives, HMI terminals, power monitoring devices, overload relays, safety relays, telemetry devices (e.g., analog sensors such as temperature, pressure, or flow sensors), sensors (e.g., photosensors, proximity switches, etc.), or other such industrial products. Industrial products 306 are provisioned with respective identity objects 302 at the time the products were manufactured, each identity object 302 comprising information about its corresponding product 306. Example product information that can be contained in an identity object 302 can include, but is not limited to, a vendor identifier, a product name, a model number, a serial number, a product lifecycle status (e.g., active, discontinued, retired, etc.), a warranty number, a firmware revision, a firmware lifecycle status (e.g., active, limited, retired, etc.), a hardware revision, a date that the product was manufactured, warranty information, or other such product information.

Industrial product inventory system 202 can, for each customer site, discover industrial products 306 that arc deployed on the plant network 116 and retrieve each discovered product's identity object 302 if available. The system 202 can then generate a browsable inventory of the customer's products based on information contained in the collected identity objects 302. In some embodiments, the system 202 can also access external applications, databases, or sites to provide further product-specific services. This can include, for example, interfacing with vendor-specific device registration applications 308 so that the inventory system's native interfaces can be used to register selected industrial products 306 that are part of the user's inventory. The system 202 can also access web-based product pages 310 to obtain updates relevant to industrial products 306 included in the customer's inventor. These updates can include, for example, notifications of firmware upgrades, notifications of known security vulnerabilities, notifications of product replacement offers, or other such updates. Users associated with respective different industrial enterprises (or customers) can interface with the system via client devices 304. The inventory system can generate and serve suitable interface displays to the client devices 304 that allow users to initiate device discover, view their industrial product inventory, view results of product analytics, initiate registration of selected products 306, receive product-specific notifications, or perform other interactions with the system 202.

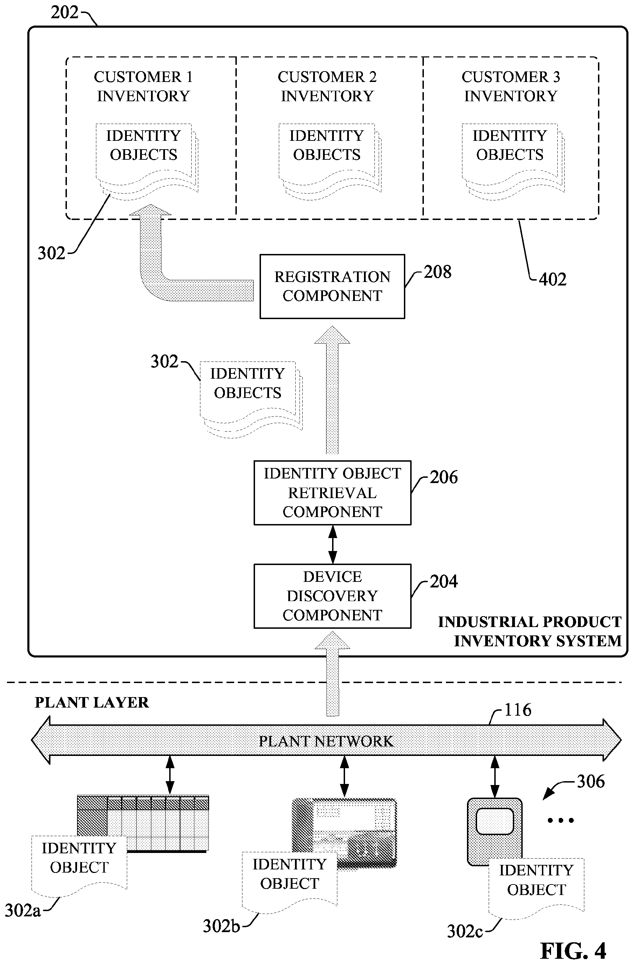

FIG. 4 is a diagram illustrating discovery and retrieval of identity objects 302 from industrial products 306 within a plant environment, and registration of the identity objects 302 by the industrial product inventory system 202. As noted above, the system 202 can execute on a cloud platform, another public network such as the internet, or on a remote server. For cloud- or web-based versions of the system 202, authorized users associated with multiple different enterprises, or customers, can remotely access the industrial product inventory services supported by the system 202, and the system 202 maintains separate inventory records for the respective customers.

In this example, various industrial products 306 executing within one or more plant facilities of a customer's industrial enterprise - e.g., industrial controllers, I/O modules, motor drives, safety relays, sensor and telemetry devices, etc. - have been commissioned with identity objects 302 that are discoverable by the device discovery component 204 of the industrial product inventory system 202. These identity objects 302 can be stored on local memory of the respective products 306 by the vendors of the products 306 at the time of their manufacture. Device discovery component 204 can be configured to remotely and securely poll the customer's plant network 116 (via any intervening public or private networks) for devices having stored identity objects 302. Any suitable technique can be used by the device discovery component 204 to recognize an identity object 302, including but not limited to recognition of a data header that identifies the identity object 302, recognition of a format of the identity object 302, recognition of an encoded signature indicative of an identity object 302, or other such means. Depending on the architecture of plant network 116, the device discovery component 204 may access the products 306 via a firewall device, an edge device, a cloud gateway device, or other secure network infrastructure device.

As part of the customer's initial registration, the system 202 may prompt the customer for any network and security information required by the system 202 to identify and connect to the appropriate plant network 116 on which the industrial products are deployed (e.g., network addresses, network credentials, etc.). The system 202 can also establish a customer repository 402 for each registered customer. Customer repositories 402 are separate storage locations used to separately store product inventory information and related data for respective different customers.

Once a customer is registered with the system 202, the identity object discovery process can be initiated by a user affiliated with the customer; e.g., by logging on to the system 202 via client device 304 and submitting, via interaction with the system's interface, an instruction to initiate the product discovery process. In response, the device discovery component 204 can poll the plant network 116 (or multiple plant networks 116 across multiple facilities associated with the industrial enterprise) to identify any industrial products 306 on which identity objects 302 are stored. For each product 306 having a stored identity object 302, the identity object retrieval component 206 retrieves a copy of the identity object 302 from the product 306, and registration component 208 registers the identity object 302 in the customer repository 402 assigned to the customer.

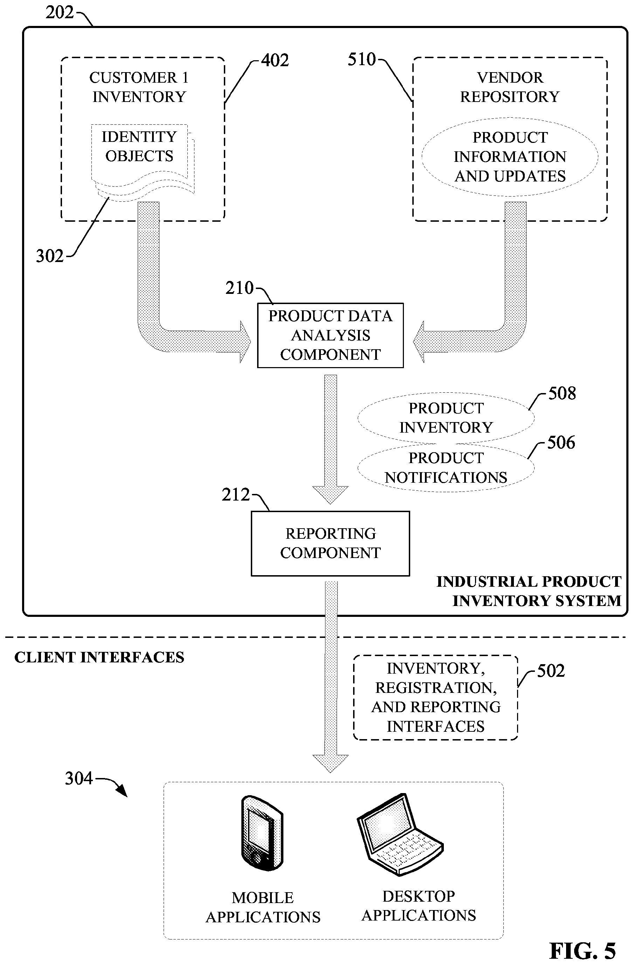

The collection of identity objects 302 in a customer repository 402 digitally represents the inventory of industrial products 306 in operation across the customer's industrial enterprise. Using information about the products 306 contained in the products' identity objects 302, the industrial product inventory system 202 can generate and deliver inventory reports to the client devices 304 of authorized users affiliated with the customer, and can also provide other product- or vendor-specific services to be described in more detail below. FIG. 5 is a diagram illustrating delivery of product inventory reports 508 and product notifications 506 by the product inventory system 202. The system 202 can include a product data analysis component 210 that performs a variety of analyses on the registered product information contained in the identity objects 302, and a reporting component 212 that displays results of the product data analyses on graphical user interfaces 502 rendered on the client devices 304.

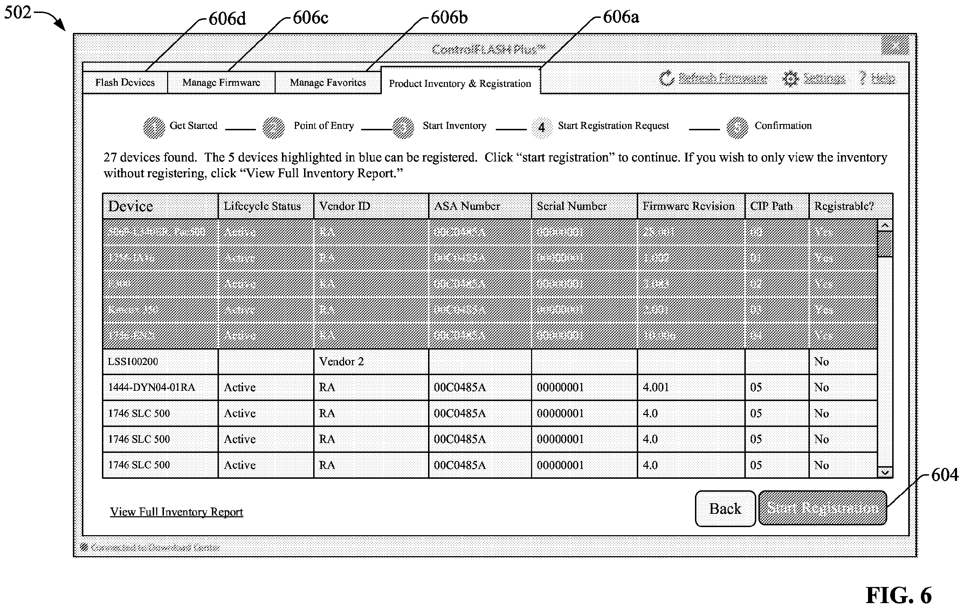

For example, reporting component 212 can render an inventory of the customer's products 306 based on analysis of the identity objects 302 registered in the customer's repository 402. FIG. 6 is an example inventory report that can be generated by the reporting component 212 based on information contained in the identity objects 302 and rendered on the user interface 502. In this example, the inventory of discovered products 306 is presented in a grid format, with rows representing respective products 306 and columns representing items of information about each product 306, at least some of which is obtained from the identity objects 302. Information about an industrial product 306 that can be rendered on the inventory report includes, but is not limited to, an identity of the vendor of the product 306, a serial number, an ASA number, a current firmware revision installed on the product, a current status of the product's lifecycle (e.g., active, discontinued, retired, etc.), or other such product information.

The inventory report also highlights rows corresponding to products 306 that can be registered with a services provider, such as the vendor of the products 306 or a third-party services provider. If desired, the customer can elect to register any registerable products 306 via appropriate interaction with the user interface 502 (e.g., by selecting a Start Registration button 604). To register the products 306 with their respective vendors or other third-party service providers, system 202 can securely transfer the registered customer information as well as the product information for the products 306 to be registered to a registered product data store associated with the vendor (e.g., via a secure telemetry service), or to an external registration system operated by the vendor. For registration procedures that require multiple user steps to facilitate registration, the system 202 can send instructions to an authorized user affiliated with the customer via email to complete the product registration. The system 202 may also access external device registration applications 308 (see FIG. 3) as needed to facilitate registration of products 306 with their appropriate vendors or service providers.

Returning to FIG. 5, once selected products 306 have been registered, the product data analysis component 210 can leverage the registered product information to provide product information services relevant to the registered products 306. To centralize delivery of these services, some embodiments of the inventory system 202 can maintain vendor repositories 510 for respective different product vendors. These vendor repositories 510 can maintain current product information and updates relating to the respective vendors' products. The system 202 can obtain the product information and updates from the vendors' web-based product pages 310 (see FIG. 3) or from another source of vendor-specific product information. Vendors may also submit product information and updates to their corresponding vendor repository 510 in some embodiments.

Product data analysis component 210 can perform a variety of analyses on the customer's registered product information, leveraging vendor-specific product information stored in the vendor repositories 510 as needed. For example, product data analysis component 210 can verify the authenticity of a registered product 306 by determining whether selected subsets of the product data contained in the product's identity object 302 correlate with a valid version of the product 306. In some embodiments, the product data analysis component 210 can confirm the authenticity of the product 306 by verifying the warranty number and the manufacturing date for the product 306, as reported by the registered identity object 302 (e.g., by comparing the warranty number and manufacturing date with valid warranty numbers and manufacturing dates for the product 306 maintained in the vendor repository 510). If the registered warranty number and manufacturing date are not as expected, the reporting component 212 can deliver a notification via interface 502 that the product is likely to be a counterfeit or illegal product that has been inadvertently put into service at the customer facility.

Based on analysis of the registered product information, product, data analysis component 210 can also identify products 306 that are subject to recall. For example, the vendor of a product 306 can submit a recall notification to the inventory system 202, which is recorded in the vendor repository 510 corresponding to that vendor. For a given customer, the product data analysis component 210 can determine whether the customer's repository 402 stores an identity object 302 corresponding to the recalled product 306, and if so, instruct the reporting component 212 to send a notification to the customer via the customer's interface 502 identifying which of the customer's active products have been recalled. Such notifications can also include instructions regarding steps the customer can take to replace those products 306 (including contact information for the vendor, a recall number, etc.).

Based on analysis of the registered product information, the system 202 can also generate end-of-life notifications for products 306 whose lifecycle status indicates that the product 306 is approaching, or has reached, the end of its useful life. In various embodiments, the product data analysis component 210 can determine the lifecycle status for a product 306 based on a recorded amount of time that the product 306 has had an Active lifecycle status, an explicit indication of the product's end-of-life status recorded in the product's identity object 302 (in cases in which the product 306 is capable of writing updates to its local copy of the identity object 302 and submitting the updated identity object to the system 202), or other such means. In response to a determination by the product data analysis component 210 that a product 306 owned by a customer has reached the end of its lifecycle status, the reporting component 212 can send a notification (e.g., via interface 502) to the customer identifying the product 306 that has reached the end of its operational lifespan. The notification may also include information identifying suitable replacement products that can take the place of the expired product, as determined from product information stored in the appropriate vendor repository 510.

The registered product information can also be used by the system 202 to determine whether a customer owns an industrial product 306 having a newly discovered security vulnerability, and to deliver a notification to the customer informing of the security issue. Updates regarding known or newly discovered security vulnerabilities can be submitted by product vendors to their vendor repositories 510, and the product data analysis component 210 can correlate these updates with the customer's identity objects 302 to determine whether the customer owns the product 306 that is subject to the security vulnerability. Based on this determination, the reporting component 212 can deliver a notification (e.g., via interface 502) identifying the product 306 and providing details regarding the security concern. In some embodiments, the notification can also include information regarding possible countermeasures that the customer can implement to mitigate the security concern.

In some embodiments, inventory system 202 can also generate and deliver customized recommendations to the customer based on analysis of their product inventory, as defined by their registered identity object data. For example, based on the types of industrial products and the numbers of each type of product in service at a customer facility (as determined from the customer's registered identity objects 302), the product data analysis component 210 can generate an itemization of spare parts or equipment that the customer should maintain in inventory, as well as a number of each spare part that should be maintained, to ensure continued operation of the customer's equipment in the event of product failures. The reporting component 212 can render this recommended spare part inventory on the user via interface 502. In some embodiments, the interface 502 can also render controls that allow the user to submit orders for the recommended spare parts to their respective vendors.

Some embodiments of the inventory system 202 can also sell upgrade services based on analysis of hardware lifecycle data included as part of the registered product data. For example, based on analysis of a customer's identity object data, product data analysis component 210 can identify a product 306 that is nearing the end of its lifecycle. Based on further analysis of the product information stored on the vendor repository 510 corresponding to the product's vendor, the product data analysis component 210 can determine a suitable upgraded product that can be used to replace the obsolete product. The reporting component 212 can then send a notification (e.g.. via interface 502) informing the user that the product 306 is nearing obsolescence and providing information regarding possible replacement products. In some such embodiments, system 202 can also inform the customer of any performance benefits that may be gained by upgrading an older product with a newer available version of the product.

As part of the registered inventory data, system 202 can also collect information regarding time usage of devices or products 306 in some embodiments. For example, some devices may have components (e.g., fans, belts, etc.) that should be replaced according to a recommended replacement frequency. To facilitate generation of proactive replacement notifications, identity object retrieval component 206 can be configured to identify identity objects 302 stored in a customer's repository 402 corresponding to products 306 having known components that should be replaced according to a time-based or usage-based schedule, and remotely monitor the usage time of the corresponding products 306. The product data analysis component 210 can monitor this usage time information for each product 306 in view of the recommended replacement schedules for the product's components, and in response to determining that the product's operating time is nearing its recommended trigger for replacement of a component, the reporting component 212 can generate a timely notification informing a customer that the device's component should be replaced. In some embodiments, the inventory system 202 can also automatically initiate purchase of the replacement component when the inventory information indicates that the component is nearing its replacement trigger.

Some embodiments of system 202 can also provide firmware upgrade services based on the firmware lifecycle status indicated in the registered product information. For example, the product data analysis component 210 can determine whether a product's current firmware version is supported based on a comparison of the firmware version recorded in the product's identity object 302 with the product information stored in the vendor repository 510, which can specify the support statuses of respective firmware versions for the product. If a device's firmware lifecycle status indicates that the device's firmware is no longer supported, reporting component 212 can send a notification to the customer (e.g., via interface 502) indicating that the device's firmware should be updated. In some such embodiments. system 202 may automatically upgrade the device's firmware upon determining that the currently installed firmware version is no longer supported. Alternatively, the interface 502 may include controls that allow the user to selectively update the firmware on any product 306 in their inventory. In either case, the system 202 can act as an intermediary between the product vendor and the product 306 deployed on the plant floor for the purposes of upgrading firmware. According to an example firmware upgrade procedure, the product data analysis component 210 can obtain the latest version of the firmware from the vendor's website or product page 310 (see FIG. 3) and the device discovery component 204 can remotely install this firmware version on the product 306 (via any intermediate networks between the system 202 and the product 306, including the internet and the plant network 116).

The reporting component 212 can generate suitably formatted user interfaces 502 for interacting with the inventory system 202. In the example depicted in FIG. 6, the interface 502 comprises multiple selectable category tabs 606 that allow the user to selectively view different categories of their product inventory information. These can include a Product Inventory & Registration tab 606a (depicted as being selected in FIG. 6) that displays the list of products 306 that make up the customer's inventory and that allows the user to selectively register products with their respective vendors. A Manage Favorites tab 606 can display an interface that allows the user to create custom views of their inventory of products 306, or to customize the types of notifications the system 202 should deliver to the customer. A Manage Firmware tab 606c can display an interface for viewing the firmware statuses of any products 306 in the customer's inventory that require firmware for their operation, and to manage updates to the firmware of those products 306. A Flash Devices tab 606d can display an interface that allows the user to view and manage the statuses of other types of software on their products 306.

Embodiments of the industrial product inventory system 202 described herein can comprehensively document the industrial products within a customer's inventory and present this inventory information in an organized, browsable manner. The system 202 also provides a centralized interface for managing firmware upgrades and product replacements, and offers proactive notifications when these upgrades are required. The system 202 also serves as a means for product vendors to deliver notifications to owners of their industrial products regarding discovered security vulnerabilities, product-specific offers, or other such notifications.

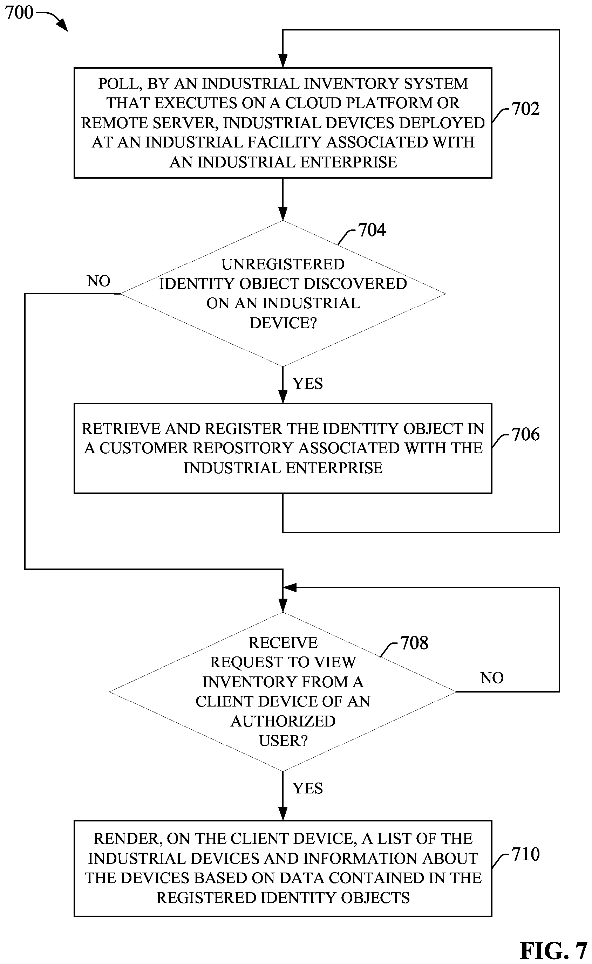

FIGs. 7-9 illustrate various methodologies in accordance with one or more embodiments of the subject application. While, for purposes of simplicity of explanation, the methodologies shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 7 illustrates an example methodology 700 for generating an inventory of an industrial asset owner's industrial products. Initially, at 702, an industrial inventory system executing on a cloud platform or remote server polls industrial devices deployed at an industrial facility associated with an industrial enterprise. This polling process can discover industrial devices installed on an industrial network and executing in the plant facility (e.g., industrial controllers, motor drives, safety relays, I/O modules, telemetry devices, sensors, etc.) and identify which of these devices has an associated identity object store on the device's memory An identity object can be commissioned on an industrial device by the device's vendor and contains information about the device, including but not limited to a model number, a serial number, a vendor identifier, the manufacturing date, a warranty number, a firmware revision, and other such information.

At 704. a determination is made, based on the polling at step 702, as to whether an unregistered identity object is discovered on an industrial device. If an unregistered identity object is discovered (YES at step 704). the methodology proceeds to step 706, where the identity object is retrieved by the inventory system and registered in a customer repository associated with the industrial enterprise. The methodology then returns to step 702, and steps 702-706 are repeated for all unregistered identity objects discovered on the industrial devices.

When all identity objects on the industrial devices have been discovered, retrieved, and registered (NO at step 704), the methodology proceeds to step 708, where a determination is made as to whether a request to view the inventory of devices is received from a client device of a user authorized to access the inventory information. If such a request is received (YES at step 708), the methodology proceeds to step 710, where a list of the industrial devices and information about the devices is rendered on the client device based on data contained in the registered identity objects.

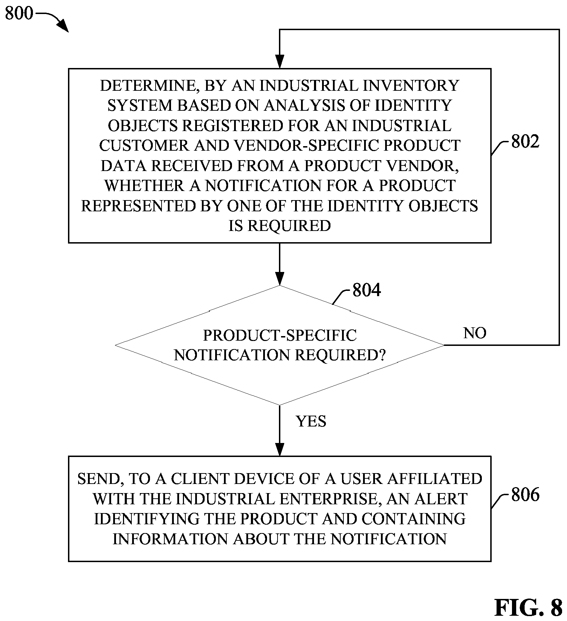

FIG. 8 illustrates an example methodology 800 for providing product-specific notifications to owners of industrial products. Initially, at 802, an industrial inventory system determines, based on analysis of identity objects registered for an industrial customer and vendor-specific product data received from a product vendor, whether a notification for a product represented by one of the identity objects is required. The identity objects can have been previously registered by the inventory system using methodology 700 described above. The vendor-specific product data can comprise, for example, information regarding discovered security vulnerabilities associated with a product, information regarding product-specific offers being run by the vendor, information regarding new versions of firmware or other software applicable to specific products offered by the vendor, or other such information. The determination at step 802 can determine whether a notification is required based on a determination that any of the vendor-specific product data is applicable to a product represented by one of the identity objects.

At 804, a determination is made as to whether the inventory system has deemed a notification necessary. If a notification is required (YES at step 804), the methodology proceeds to step 806, where an alert identifying the product and containing information about the notification is sent to a client device of a user affiliated with the industrial enterprise.

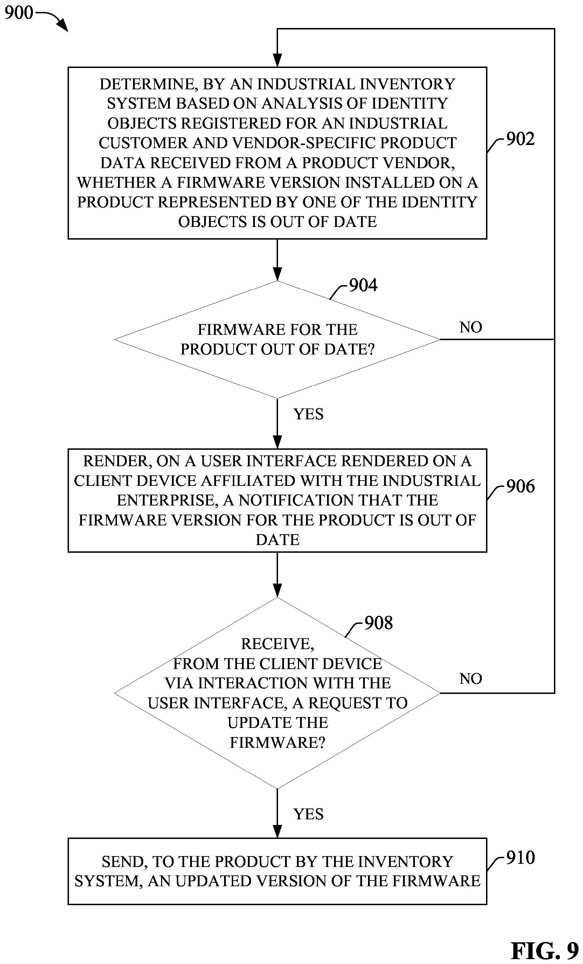

FIG. 9 illustrates an example methodology 900 for proactively notifying industrial asset owners when firmware installed in their industrial products is out of date and updating the firmware on demand. Initially, at 902, an industrial inventory system determines, based on analysis of identity objects registered for an industrial customer together with vendor-specific product data received from a product vendor, whether a firmware version installed on an industrial product represented by one of the identity objects is out of date. The identity objects can have been previously registered by the inventory system using methodology 700 described above. In some embodiments, the vendor-specific product information can record the support statuses of respective firmware versions associated with the product (e.g., supported or not supported), and the inventory system can determine whether the firmware version currently installed on the product is out of date cross-referencing the firmware version recorded in the identity object with this firmware support status information.

At 904, a determination is made as to whether the currently installed firmware version for the product is out of date. If the firmware for the product is out of date (YES at step 904), the methodology proceeds to step 906, where the system renders, on a user interface rendered on a client device affiliated with the industrial enterprise, a notification that the firmware version for the product is out of date. In some embodiments, the user interface can list an inventory of industrial products owned by the industrial enterprise (as determined from the identity objects) together with a firmware version number and support status for each product that relies on firmware for its operation.

At 908, a determination is made as to whether the system receives, from the client device via interaction with the user interface, a request to update the firmware. If such a request is received (YES at step 908), the methodology proceeds to step 910, where the system sends an updated version of the firmware to the product. In some embodiments, the inventory system can obtain the updated firmware version from the vendor's firmware download website or database and deliver the updated firmware to the product via any intermediate public and private networks (e.g., the internet, the plant network on which the product operates, etc.).

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate via the network, which includes control, automation, and/or public networks. The PLC or automation controller can also communicate to and control various other devices such as standard or safety-rated I/O modules including analog. digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O. Fieldbus, Modbus, Profibus, CAN, wireless networks, serial protocols, and so forth. In addition, the network devices can include various possibilities (hardware and/or software components). These include components such as switches with virtual local area network (VLAN) capability. LANs, WANs, proxies, gateways, routers, firewalls, virtual private network (VPN) devices, servers, clients, computers, configuration tools, monitoring tools, and/or other devices.

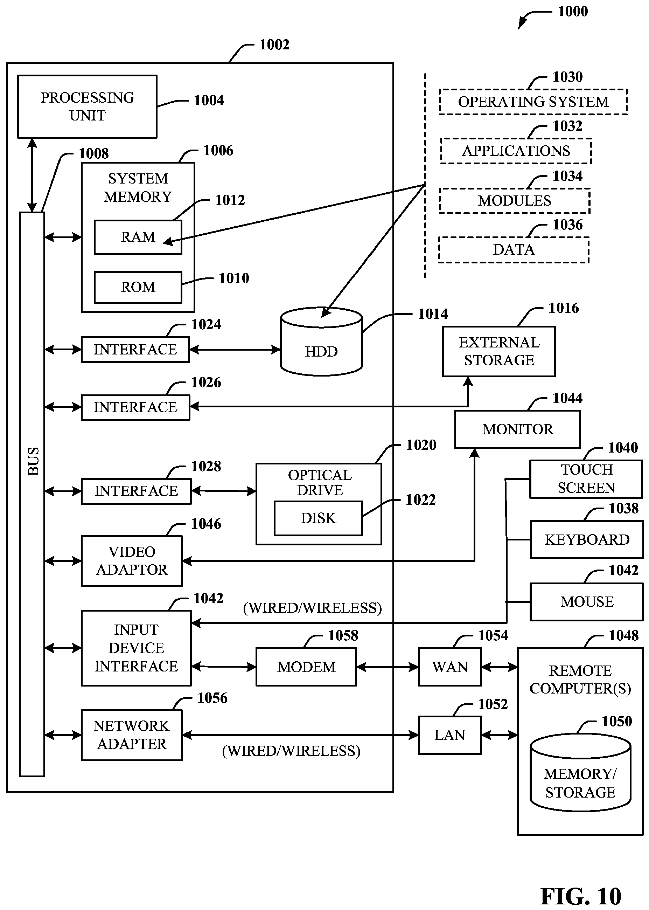

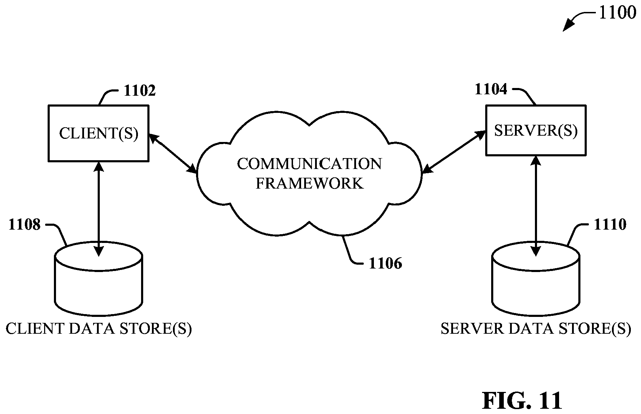

**In** order to provide a context for the various aspects of the disclosed subject matter, FIGs. 10 and 11 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic. RF, infrared and other wireless media.

With reference again to FIG. 10 the example environment 1000 for implementing various embodiments of the aspects described herein includes a computer 1002, the computer 1002 including a processing unit 1004. a system memory 1 006 and a system bus 1008. The system bus 1008 couples system components including, but not limited to, the system memory 1006 to the processing unit 1004. The processing unit 1004 can be any of various commercially available processors. Dual microprocessors and other multi-processor architectures can also be employed as the processing unit 1004.

The system bus 1008 can be any of several types of bus structure that can further interconnect to a memory bus (with or without a memory controller), a peripheral bus, and a local bus using any of a variety of commercially available bus architectures. The system memory 1006 includes ROM 1010 and RAM 1012. A basic input/output system (BIOS) can be stored in a non-volatile memory such as ROM, erasable programmable read only memory (EPROM). EEPROM, which BIOS contains the basic routines that help to transfer information between elements within the computer 1002, such as during startup. The RAM 1012 can also include a highspeed RAM such as static RAM for caching data.

The computer 1002 further includes an internal hard disk drive (HDD) 1014 (e.g., EIDE, SATA), one or more external storage devices 1016 (e.g., a magnetic floppy disk drive (FDD) 1016, a memory stick or flash drive reader, a memory card reader, etc.) and an optical disk drive 1020 (e.g., which can read or write from a CD-ROM disc, a DVD, a BD, etc.). While the internal HDD 1014 is illustrated as located within the computer 1002, the internal HDD 1014 can also be configured for external use in a suitable chassis (not shown). Additionally, while not shown in environment 1000, a solid state drive (SSD) could be used in addition to, or in place of, an HDD 1014. The HDD 1014, external storage device(s) 1016 and optical disk drive 1020 can be connected to the system bus 1008 by an HDD interface 1024, an external storage interface 1026 and an optical drive interface 1028, respectively. The interface 1024 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1012, including an operating system 1030, one or more application programs 1032, other program modules 1034 and program data 1036. All or portions of the operating system, applications, modules, and/or data can also be cached in the RAM 1012. The systems and methods described herein can be implemented utilizing various commercially available operating systems or combinations of operating systems.

Computer 1002 can optionally comprise emulation technologies. For example, a hypervisor (not shown) or other intermediary can emulate a hardware environment for operating system 1030, and the emulated hardware can optionally be different from the hardware illustrated in FIG. 10. In such an embodiment, operating system 1030 can comprise one virtual machine (VM) of multiple VMs hosted at computer 1002. Furthermore, operating system 1030 can provide runtime environments, such as the Java runtime environment or the .NET framework, for application programs 1032. Runtime environments are consistent execution environments that allow application programs 1032 to run on any operating system that includes the runtime environment. Similarly, operating system 1030 can support containers, and application programs 1032 can be in the form of containers, which are lightweight, standalone, executable packages of software that include, e.g., code, runtime, system tools, system libraries and settings for an application.

Further, computer 1002 can be enable with a security module, such as a trusted processing module (TPM). For instance with a TPM, boot components hash next in time boot components, and wait for a match of results to secured values, before loading a next boot component. This process can take place at any layer in the code execution stack of computer 1002, e.g., applied at the application execution level or at the operating system (OS) kernel level, thereby enabling security at any level of code execution.

A user can enter commands and information into the computer 1002 through one or more wired/wireless input devices, e.g., a keyboard 1038, a touch screen 1040, and a pointing device, such as a mouse 1024. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1004 through an input device interface 1044 that can he coupled to the system bus 1008, but can be connected by other interfaces, such as a parallel port, an IEEE 1394 serial port, a game port, a USB port, an IR interface, a BLUETOOTH^{®} interface, etc.

A monitor 1044 or other type of display device can be also connected to the system bus 1008 via an interface, such as a video adapter 1046. In addition to the monitor 1044, a computer typically includes other peripheral output devices (not shown), such as speakers, printers, etc.

The computer 1002 can operate in a networked environment using logical connections via wired and/or wireless communications to one or more remote computers, such as a remote computers) 1048. The remote computer(s) 1048 can be a workstation, a server computer, a router, a personal computer, portable computer, microprocessor-based entertainment appliance, a peer device or other common network node, and typically includes many or all of the elements described relative to the computer 1002, although, for purposes of brevity, only a memory/storage device 1050 is illustrated. The logical connections depicted include wired/wireless connectivity to a local area network (LAN) 1052 and/or larger networks, e.g., a wide area network (WAN) 1054. Such LAN and WAN networking environments are commonplace in offices and companies, and facilitate enterprise-wide computer networks, such as intranets, all of which can connect to a global communications network, e.g., the Internet.

When used in a LAN networking environment, the computer 1002 can be connected to the local network 1052 through a wired and/or wireless communication network interface or adapter 1056. The adapter 1056 can facilitate wired or wireless communication to the LAN 1052, which can also include a wireless access point (AP) disposed thereon for communicating with the adapter 1056 in a wireless mode.

When used in a WAN networking environment, the computer 1002 can include a modem 1058 or can be connected to a communications server on the WAN 1054 via other means for establishing communications over the WAN 1054, such as by way of the Internet. The modem 1058, which can be internal or external and a wired or wireless device, can be connected to the system bus 1008 via the input device interface 1024. In a networked environment, program modules depicted relative to the computer 1002 or portions thereof, can be stored in the remote memory/storage device 1050. It will be appreciated that the network connections shown are example and other means of establishing a communications link between the computers can be used.

When used in either a LAN or WAN networking environment, the computer 1002 can access cloud storage systems or other network-based storage systems in addition to, or in place of, external storage devices 1016 as described above. Generally, a connection between the computer 1002 and a cloud storage system can be established over a LAN 1052 or WAN 1054 e.g., by the adapter 1056 or modem 1058, respectively. Upon connecting the computer 1002 to an associated cloud storage system, the external storage interface 1026 can, with the aid of the adapter 1056 and/or modem 1058, manage storage provided by the cloud storage system as it would other types of external storage. For instance, the external storage interface 1026 can be configured to provide access to cloud storage sources as if those sources were physically connected to the computer 1002.

The computer 1002 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 11 is a schematic block diagram of a sample computing environment 1100 with which the disclosed subject matter can interact. The sample computing environment 1100 includes one or more client(s) 1102. The client(s) 1102 can be hardware and/or software (e.g., threads, processes, computing devices). The sample computing environment 1100 also includes one or more server(s) 1104. The server(s) 1104 can also be hardware and/or software (e.g., threads, processes, computing devices). The servers 1104 can house threads to perform transformations by employing one or more embodiments as described herein, for example. One possible communication between a client 1102 and servers 1104 can be in the form of a data packet adapted to be transmitted between two or more computer processes. The sample computing environment 1100 includes a communication framework 1106 that can be employed to facilitate communications between the client(s) 1102 and the server(s) 1104. The client(s) 1102 are operably connected to one or more client data store(s) 1108 that can be employed to store information local to the client(s) 1102. Similarly, the server(s) 1104 arc operably connected to one or more server data store(s) 1110 that can be employed to store information local to the servers 1104.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

**The following is a list of further preferred embodiments of the invention:**
Embodiment 1. A system, comprising:
   a memory that stores executable components; and
   a processor, operatively coupled to the memory, that executes the executable components, the executable components comprising:
      a device discovery component configured to discover industrial products deployed at an industrial facility;
      an identity object retrieval component configured to retrieve information about the industrial products stored as identity objects on the industrial products; and
      a reporting component configured to render, on a client device, a browsable inventory of the industrial products based on the information about the industrial products.
Embodiment 2. The system of embodiment 1, wherein the identity objects specify, as the information about the industrial products, at least one of vendor identifiers, product names, model numbers, serial numbers, product lifecycle status, warranty numbers, firmware revisions, firmware lifecycle statuses, hardware revisions, manufacture dates, or warranty information.
Embodiment 3. The system of embodiment 1, wherein the executable components further comprise a registration component configured to store sets of identity objects retrieved from different industrial customers on respective different customer repositories.
Embodiment 4. The system of embodiment 1, wherein the reporting component is configured to render, on the client device, an interface that displays the browsable inventory of the industrial products in a tabular format comprising columns representing at least one of model numbers of the industrial products, lifecycle statuses of the industrial products, vendors of the industrial products, serial numbers of the industrial products, firmware versions installed on the industrial products, or an indication of whether the industrial products can be registered with their corresponding vendors.
Embodiment 5. The system of embodiment 1, wherein
   the reporting component is configured to render, on the client device, an interface that displays the browsable inventory of the industrial products and that displays, for an industrial product of the industrial products, an indication of whether the industrial product can be registered with a vendor of the industrial product, and
   the executable components further comprise a registration component configured to, in response to receipt, via interaction with the interface, of a request to register the industrial product, initiate a registration process for the industrial product with the vendor.
Embodiment 6. The system of embodiment 1, wherein
   the executable components further comprise a product data analysis component configured to determine whether a firmware version of an industrial product, of the one or more industrial products, is out of date based on analysis of information contained in an identity object, of the identity objects, corresponding to the industrial product and product information submitted to the system by the vendor, and
   the reporting component is configured to render, on the client device, an interface that displays the browsable inventory of the industrial products and that displays, for the industrial product, an indication of whether the firmware version of the industrial product is out of date.
Embodiment 7. The system of embodiment 6, wherein
   the product data analysis component is further configured to, in response to receipt, via interaction with the interface, of a request to update the firmware, retrieve a current version of the firmware from a repository associated with the vendor, and
   the reporting component is configured to initiate installation of the current version of the firmware on the industrial product.
Embodiment 8. The system of embodiment 1, wherein
   the executable components further comprise a product data analysis component configured to determine whether one or more of the industrial products is a counterfeit product based on analysis of information stored in an identity object, of the identity objects, corresponding to the industrial product, and
   the reporting component is configured to render, on the client device, an interface that displays a notification indicating that the one or more of the industrial products is the counterfeit product.
Embodiment 9. The system of embodiment 1, wherein
   the executable components further comprise a product data analysis component configured to determine, based on analysis of notification information received from a vendor of an industrial product of the industrial products, that a notification has been issued for the industrial product, and
   the reporting component is configured to render, on the client device, an interface that displays information regarding the notification.
Embodiment 10. The system of embodiment 9, wherein the notification is at least one of a notification of a security vulnerability of the industrial product or a recall notice for the industrial product.
Embodiment 11. The system of embodiment 1, wherein the industrial products comprise at least one of an industrial controller, an I/O module, a safety relay, a motor drive, a telemetry device, a sensor, a power monitoring device, or an overload relay.
Embodiment 12. A method, comprising:
   discovering, by a system comprising a processor, industrial products deployed at an industrial facility;
   retrieving, by the system, identity objects from the industrial products, wherein the identity objects contain information about the industrial products; and
   rendering, by the system on a client device, an interface that displays a browsable inventory of the industrial products based on the information contained in the identity objects.
Embodiment 13. The method of embodiment 12, wherein the identity objects contain, as the information about the industrial products, at least one of vendor identifiers, product names, model numbers, serial numbers, product lifecycle status, warranty numbers, firmware revisions, firmware lifecycle statuses, hardware revisions, manufacture dates, or warranty information.
Embodiment 14. The method of embodiment 12, wherein the rendering comprises rendering, on the interface, the browsable inventory of the industrial products in a tabular format comprising columns representing at least one of model numbers of the industrial products, lifecycle statuses of the industrial products, vendors of the industrial products, serial numbers of the industrial products, firmware versions installed on the industrial products, or an indication of whether the industrial products can be registered with their corresponding vendors.
Embodiment 15. The method of embodiment 12, wherein
   the rendering comprises displaying, for an industrial product of the industrial products, an indication of whether the industrial product can be registered with a vendor of the industrial product, and
   the method further comprises, in response to receipt, via interaction with the interface, of a request to register the industrial product, initiate a registration process for the industrial product with the vendor.
Embodiment 16. The method of embodiment 12, further comprising:
   determining, by the system, whether a firmware version of an industrial product, of the one or more industrial products, is out of date based on analysis of information contained in an identity object, of the identity objects, corresponding to the industrial product and product information submitted to the system by the vendor, and
   rendering, on the interface, an indication of whether the firmware version of the industrial product is out of date.
Embodiment 17. The method of embodiment 16, further comprising, in response to receiving, via interaction with the interface, of a request to update the firmware:
   retrieving, by the system, a current version of the firmware from a repository associated with the vendor, and
   initiating installation of the current version of the firmware on the industrial product.
Embodiment 18. The method of embodiment 12, further comprising:
   determining, by the system, that one or more of the industrial products is a counterfeit product based on analysis of information stored in an identity object, of the identity objects, corresponding to the industrial product, and
   in response to the determining, rendering, by the system on the interface, a notification indicating that the one or more of the industrial products is the counterfeit product.
Embodiment 19. A non-transitory computer-readable medium having stored thereon instructions that, in response to execution, cause a system comprising a processor to perform operations, the operations comprising:
   discovering industrial products operating at an industrial facility and having stored therein identity objects containing information about the industrial devices;
   retrieving identity objects from the industrial devices; and
   rendering, on a client device, an interface that displays a browsable inventory of the industrial devices based on the information contained in the identity objects.
Embodiment 20. The non-transitory computer-readable medium of embodiment 19, wherein the identity objects contain, as the information about the industrial products, at least one of vendor identifiers, product names, model numbers, serial numbers, product lifecycle status, warranty numbers, firmware revisions, firmware lifecycle statuses, hardware revisions, manufacture dates, or warranty information.

## Claims

1. A system, comprising:
a memory that stores executable components; and
a processor, operatively coupled to the memory, that executes the executable components, the executable components comprising:
a device discovery component configured to discover industrial products deployed at an industrial facility;
an identity object retrieval component configured to retrieve information about the industrial products stored as identity objects on the industrial products; and
a reporting component configured to render, on a client device, a browsable inventory of the industrial products based on the information about the industrial products.

2. The system of claim 1, wherein the identity objects specify, as the information about the industrial products, at least one of vendor identifiers, product names, model numbers, serial numbers, product lifecycle status, warranty numbers, firmware revisions, firmware lifecycle statuses, hardware revisions, manufacture dates, or warranty information.

3. The system of claim 1 or 2, wherein the executable components further comprise a registration component configured to store sets of identity objects retrieved from different industrial customers on respective different customer repositories.

4. The system of claim 1 or 2, wherein:
the reporting component is configured to render, on the client device, an interface that displays the browsable inventory of the industrial products in a tabular format comprising columns representing at least one of model numbers of the industrial products, lifecycle statuses of the industrial products, vendors of the industrial products, serial numbers of the industrial products, firmware versions installed on the industrial products, or an indication of whether the industrial products can be registered with their corresponding vendors; or the reporting component is configured to render, on the client device, an interface that displays the browsable inventory of the industrial products and that displays, for an industrial product of the industrial products, an indication of whether the industrial product can be registered with a vendor of the industrial product, and
the executable components further comprise a registration component configured to, in response to receipt, via interaction with the interface, of a request to register the industrial product, initiate a registration process for the industrial product with the vendor.

5. The system of claim 1 or 2, wherein:
the executable components further comprise a product data analysis component configured to determine whether a firmware version of an industrial product, of the one or more industrial products, is out of date based on analysis of information contained in an identity object, of the identity objects, corresponding to the industrial product and product information submitted to the system by the vendor, and
the reporting component is configured to render, on the client device, an interface that displays the browsable inventory of the industrial products and that displays, for the industrial product, an indication of whether the firmware version of the industrial product is out of date;
wherein the product data analysis component is further configured to, in response to receipt, via interaction with the interface, of a request to update the firmware, retrieve a current version of the firmware from a repository associated with the vendor, and
the reporting component is configured to initiate installation of the current version of the firmware on the industrial product.

6. The system of claim 1 or 2, wherein:
the executable components further comprise a product data analysis component configured to determine whether one or more of the industrial products is a counterfeit product based on analysis of information stored in an identity object, of the identity objects, corresponding to the industrial product, and
the reporting component is configured to render, on the client device, an interface that displays a notification indicating that the one or more of the industrial products is the counterfeit product; or
the executable components further comprise a product data analysis component configured to determine, based on analysis of notification information received from a vendor of an industrial product of the industrial products, that a notification has been issued for the industrial product, and
the reporting component is configured to render, on the client device, an interface that displays information regarding the notification,
wherein the notification is at least one of a notification of a security vulnerability of the industrial product or a recall notice for the industrial product.

7. The system of one of claims 1 to 6, wherein the industrial products comprise at least one of an industrial controller, an I/O module, a safety relay, a motor drive, a telemetry device, a sensor, a power monitoring device, or an overload relay.

8. A method, comprising:
discovering, by a system comprising a processor, industrial products deployed at an industrial facility;
retrieving, by the system, identity objects from the industrial products, wherein the identity objects contain information about the industrial products; and
rendering, by the system on a client device, an interface that displays a browsable inventory of the industrial products based on the information contained in the identity objects.

9. The method of claim 8, wherein the identity objects contain, as the information about the industrial products, at least one of vendor identifiers, product names, model numbers, serial numbers, product lifecycle status, warranty numbers, firmware revisions, firmware lifecycle statuses, hardware revisions, manufacture dates, or warranty information.

10. The method of claim 8 or 9, wherein the rendering comprises rendering, on the interface, the browsable inventory of the industrial products in a tabular format comprising columns representing at least one of model numbers of the industrial products, lifecycle statuses of the industrial products, vendors of the industrial products, serial numbers of the industrial products, firmware versions installed on the industrial products, or an indication of whether the industrial products can be registered with their corresponding vendors.

11. The method of claim 8 or 9, wherein
the rendering comprises displaying, for an industrial product of the industrial products, an indication of whether the industrial product can be registered with a vendor of the industrial product, and
the method further comprises, in response to receipt, via interaction with the interface, of a request to register the industrial product, initiate a registration process for the industrial product with the vendor.

12. The method of claim 8 or 9, further comprising:
determining, by the system, whether a firmware version of an industrial product, of the one or more industrial products, is out of date based on analysis of information contained in an identity object, of the identity objects, corresponding to the industrial product and product information submitted to the system by the vendor, and
rendering, on the interface, an indication of whether the firmware version of the industrial product is out of date, and
further comprising, in response to receiving, via interaction with the interface, of a request to update the firmware:
retrieving, by the system, a current version of the firmware from a repository associated with the vendor, and
initiating installation of the current version of the firmware on the industrial product.

13. The method of claim 8 or 9, further comprising:
determining, by the system, that one or more of the industrial products is a counterfeit product based on analysis of information stored in an identity object, of the identity objects, corresponding to the industrial product, and
in response to the determining, rendering, by the system on the interface, a notification indicating that the one or more of the industrial products is the counterfeit product.

14. A non-transitory computer-readable medium having stored thereon instructions that, in response to execution, cause a system comprising a processor to perform operations, the operations comprising:
discovering industrial products operating at an industrial facility and having stored therein identity objects containing information about the industrial devices;
retrieving identity objects from the industrial devices; and
rendering, on a client device, an interface that displays a browsable inventory of the industrial devices based on the information contained in the identity objects.

15. The non-transitory computer-readable medium of claim 14, wherein the identity objects contain, as the information about the industrial products, at least one of vendor identifiers, product names, model numbers, serial numbers, product lifecycle status, warranty numbers, firmware revisions, firmware lifecycle statuses, hardware revisions, manufacture dates, or warranty information.
